Europäisches Patentamt

European Patent Office

Office européen des brevets

(11) Veröffentlichungsnummer: **0 125 496**

**A1**

(12) **EUROPÄISCHE PATENTANMELDUNG**

(21) Anmeldenummer: **84104099.1**

(22) Anmeldetag: **12.04.84**

(51) Int. Cl.³: **F 03 B 15/20**
**F 03 B 1/04, F 16 K 7/18**

(30) Priorität: **15.04.83 AT 1366/83**

(43) Veröffentlichungstag der Anmeldung:
**21.11.84 Patentblatt 84/47**

(84) Benannte Vertragsstaaten:
**BE CH DE FR GB IT LI LU NL SE**

(71) Anmelder: **Waldhauser, Kurt**
**Mariatrosterstrasse 170**
**A-8044 Graz(AT)**

(72) Erfinder: **Waldhauser, Kurt**
**Mariatrosterstrasse 170**
**A-8044 Graz(AT)**

(74) Vertreter: **Barger, Erich, Dipl.-Ing. et al,**
**Patentanwälte Mitscherlich -Gunschmann- Dr. Körber**
**-Schmidt-Evers- Melzer Steinsdorf Strasse 10**
**D-8000 München 22(DE)**

(54) **Wasserturbine.**

(57) Wasserturbine, vorzugsweise für Beregnungsgeräte, mit auf einem Radkranz (4) angeordneten Schaufeln (5), die in einem sie umfassenden, geschlossenen Ringraum (6) um die Turbinenachse (2) kreisen. Eine Eintrittsöffnung (8) ist in einem Anschnitt des Ringraumes angeordnet, an der die Wasserzuführungsleitung (7) endet, und eine Austrittsöffnung (9) für das Wasser ist an beliebiger Stelle vorgesehen. Im Bereich der Eintrittsöffnung (8) und gegebenenfalls im Bereich des benachbarten Anschnittes der Wasserzuführungsleitung (7) ist ein flexibler, den Durchflußquerschnitt bestimmender Wandteil (11, 22) vorgesehen, der mittels eines, vorzugsweise gesteuerten, Druckkörpers (13), der an der Außenseite dieses Wandteiles angreift, verstellbar ist. Vorzugsweise besteht der Wandteil (11, 22) aus einem gummielastischen Stoff und ist nach außen an einem, etwa senkrecht zur Eintrittsöffnung verstellbaren, pilzförmigen Druckkörper (13) abgestützt.

FIG.5

Wasserturbine

Die Erfindung bezieht sich auf eine Wasserturbine, vorzugsweise für Beregnungsgeräte, mit auf einem Radkranz angeordneten Schaufeln, die in einem sie umfassenden, geschlossenen Ringraum um die Turbinenachse kreisen und mit einer in einem Abschnitt des Ringraumes angeordneten Eintrittsöffnung, an der die Wasserzuführungsleitung endet sowie mit einer an beliebiger Stelle vorgesehenen Austrittsöffnung für das Wasser.

Bei einer bekannten Ausführungsform einer solchen Turbine ist eine Steuerklappe vorgesehen, die im Mündungsbereich der Zuleitung um eine zur Laufradachse der Turbine parallele Achse drehbar gelagert und über einen Hebel zwischen einer gegen das Laufrad gerichteten Arbeitsstellung und einer gegen einen das Laufrad umgebenden Ringraum gerichteten Ruhestellung verschwenkbar ist. Durch diese Steuerklappe kann der Anteil der die Schaufeln antreibenden Wassermenge gegenüber jener verändert werden, die im Ringraum außerhalb der Schaufeln von der Eintrittsöffnung zur Austrittsöffnung strömt. Auf diese Weise kann das von der Turbine abgeleitete Antriebsmoment bei angenähert konstanter Drehzahl geregelt werden. Diese Bauart hat jedoch den Nachteil, daß viel Energie infolge der auftretenden Wirbelströme im Wasserring verloren geht und der zur Beregnung zur Verfügung stehende Druck verringert wird. Der Erfindung liegt die Aufgabe zugrunde, eine verbesserte Steuereinrichtung für die Regelung der Turbinenleistung zu schaffen, die über einen großen Abschnitt des Regelbereiches einen geringeren Druckabfall in der Turbine bewirkt.

Grundgedanke der Erfindung ist, ein Regelorgan im Bereich der Einströmöffnung vorzusehen, das den Strömungsquerschnitt des in die Turbine eintretenden Wasserstrahles verändert, dabei jedoch stets einen strömungstechnisch günstigen Eintritt des geregelten Wasserstrahles in die Turbine gewährleistet.

Dieses Ziel der Erfindung wird dadurch erreicht, daß sich im Bereich der Eintrittsöffnung und gegebenenfalls im Bereich des benachbarten Abschnittes der Wasserzuführungsleitung ein flexibler, den Durchflußquerschnitt bestimmender Wandteil befindet, der mittels eines vorzugsweise gesteuerten Druckkörpers, der an der Außenseite dieses Wandteiles angreift, verstellbar ist. In Ausgestaltung der Erfindung kann der Wandteil aus einem gummielastischen Stoff und nach außen von einem etwa senkrecht zur Eintrittsöffnung verstellbaren pilzförmigen Druckkörper abgestützt sein. Eine besonders günstige Lösung ergibt sich dann, wenn der Wandteil aus einem dünnen Metallstreifen besteht, der an seinem in der Strömungsrichtung des Wassers vorderen oder hinteren Rand gleitend gehalten ist und eine nach außen gerichtete Erweiterung im Gehäuse bzw. in der Zuführungsleitung abdeckt. Eine einfache Regelung für den verstellbaren Druckkörper wird ermöglicht, wenn er aus einem drehbar gelagerten Nocken besteht, der innerhalb der Gehäuseerweiterung angeordnet ist. Diese Ausführungsform ist besonders günstig, weil praktisch keine Abdichtungsprobleme bestehen.

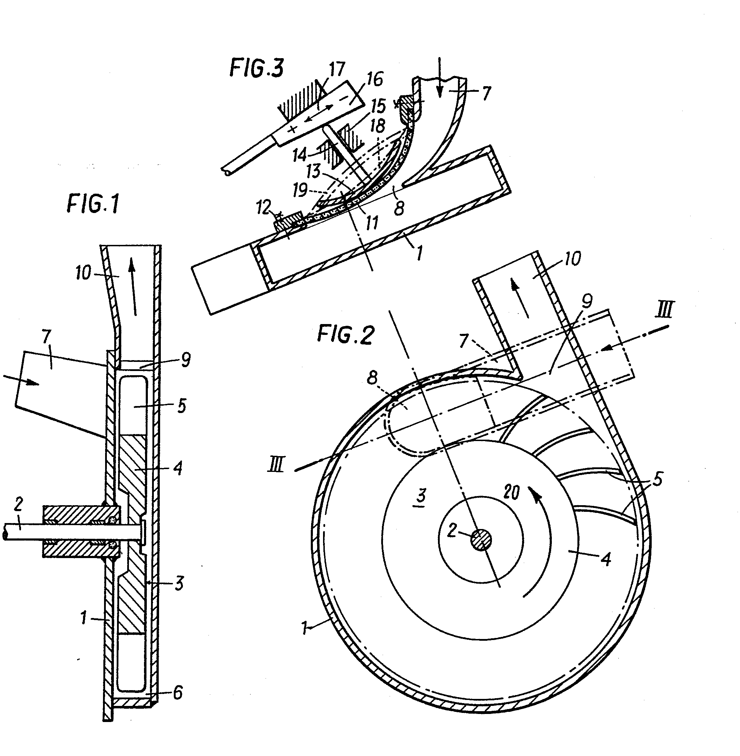

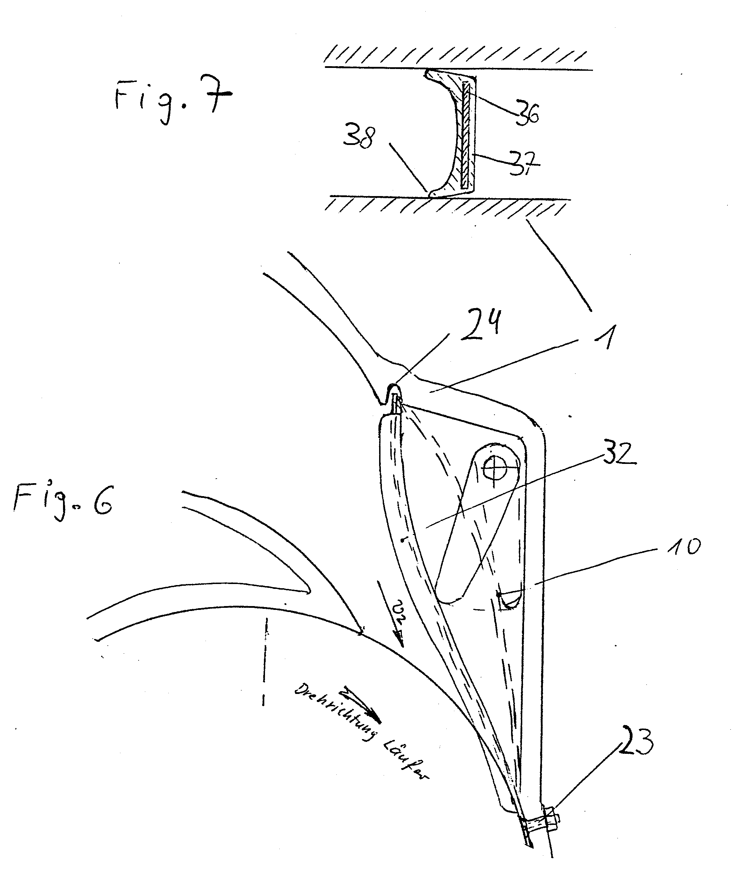

In der Zeichnung ist der Gegenstand der Erfindung schematisch dargestellt. Es zeigen Fig. 1 einen Längsschnitt durch eine Turbine erster Bauart, Fig. 2 einen Querschnitt durch die Turbine senkrecht zur Turbinenachse und Fig. 3 einen Schnitt nach der Linie III-III in Fig. 2 und die Fig. 4 und 5 eine zweite Ausführungsform der erfindungsgemäßen Turbine in Längs- und Querschnitt, Fig. 6 und 7 eine Ausgestaltung der Steuermembrane.

In einem dosenartigen Turbinengehäuse 1 ist eine
Turbinenachse 2 drehbar gelagert, auf deren innerem Ende
ein Turbinenrad 3 fliegend angeordnet ist. Dieses Turbinenrad besteht aus einem massiven     Radkranz 4 und weist
im wesentlichen radial gerichtete Turbinenschaufeln 5 auf.
Diese sind vom Turbinengehäuse 1 an drei Seiten umgeben,
so daß an der Peripherie des Turbinengehäuses 1 ein
vom Radkranz 4 nach innen abgedeckter Ringraum 6 vorhanden
ist. In diesen mündet seitlich tangential eine Wasserzuführungsleitung 7, wobei der Wasserstrahl durch eine
Eintrittsöffnung 8 in den Ringraum eintritt und durch eine
Austrittsöffnung 9 in die Leitung 10 übertritt, von der
das Wasser zur Beregnungseinrichtung geführt ist.

Im Bereich der Eintrittsöffnung 8 und im Bereich
des benachbarten Abschnittes der Zuführungsleitung 7
ist gemäß Fig. 3 eine widerstandsfähige Membrane 11 vorgesehen, die an ihrem Rand mittels eines Ringes 12 fest mit
dem Turbinengehäuse 1 und der Zuführungsleitung 7 verbunden
ist. Nach außen wir sie von einem pilzförmigen Druckkörper
13 unterstützt, dessen Stempel 14 in einem Lager 15
gleitend angeordnet ist. Der Stempel 14 stützt sich auf
einen verschiebbaren Keil 16 auf, durch dessen wahlweise
Verschiebung in Richtung des Pfeiles 17 der Druckkörper
zum Turbinengehäuse hin oder von ihm weg bewegbar ist.

In Fig. 3 ist die Membrane 11 in einer Lage gezeichnet, die der inneren Grenzstellung benachbart ist.
Soll das von der Turbine abgeleitete Drehmoment verringert
werden, so wird durch Verschieben des Keiles 16 dem Druckkörper 13 die Möglichkeit gegeben, sich nach außen zu
bewegen, so daß die Membrane in die gestrichelte Lage 18
gelangt. Durch die Vergrößerung des Querschnittes wird
die Strömungsgeschwindigkeit des eintretenden Wassers
verringert und dementsprechend auch die Drehzahl und
Leitung der Turbine.In der äußersten Lage 19 ist die
Geschwindigkeit des eintretenden Wassers so gering, daß
ein Teil entgegen der Drehrichtung des Turbinenrades 3,
angedeutet durch den Pfeil 20 in Fig. 2, von der Eintrittsöffnung 8 zur Austrittsöffnung 9 strömt und die Turbine dabei zum Teil abbremst.

Es ist daher die Leistung der Turbine in weiten Grenzen regelbar, wobei der Druckverlust auf ein Minimum gesenkt ist.

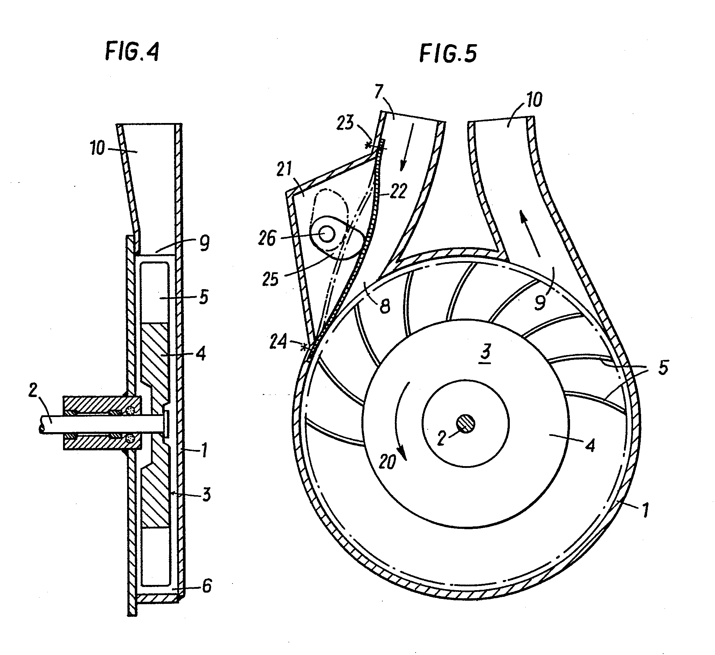

Gemäß den Fig. 4 und 5 liegen sowohl die Eintrittsöffnung 8 als auch die Austrittsöffnung 9 am Mantel 1 der Turbine. Das Turbinengehäuse weist eine nach außen gerichtete Erweiterung 21 auf, die sich in den benachbarten Abschnitt der Zuführungsleitung 17 erstreckt. Diese Erweiterung ist durch ein Stahlband 22 abgedeckt, das bei 23 fest mit der Zuführungsleitung und bei 24 längsverschieblich mit dem Turbinengehäuse 1 verbunden ist. Die Längskanten des Stahlbandes sind frei. Das Band 22 wird von einem Nocken 25 abgestützt, der auf einer in der Erweiterung 21 gelagerten Welle 26 sitzt, so daß durch Verdrehen der Welle 26 die Lage des Bandes 22 verändert werden kann. Die Wirkungsweise dieses Steuereinrichtung ist analog der bereits beschriebenen Einrichtung gemäß den Fig. 1 bis 3.

In einer Ausgestaltung der Erfindung wird die Steuermembrane aus einem gummiartigen elastischen Material mit zur Innenwandung hin gut gerundeter Oberfläche und zwei an jeder Bewegungsseite an der Turbineninnenwandung anliegenden Dichtlippen 38 (Fig. 6, 7) ausgeführt, die durch den höheren Druck und das vorbeiströmende Medium an die Turbinenwandung angedrückt werden, wodurch sie abdichten. Die Steuermembrane ist bei 23 vorzugsweise mittels einer Senkschraube an der Turbinenaußenwand fixiert und gleitet bei 24 mit ihrem freien Ende in einer Lagerrille der Turbinenwand. Zur Verbesserung der Längssteifigkeit der Steuermembrane 32 weist diese ein Federstahlband 36 auf, welches zur Gänze von elastischem Material 37 umhüllt ist. Die Steifigkeit des Federstahlbandes 36 sorgt auch für eine gleichmäßige Biegung der Steuermembrane 32 sowohl im angesteuerten als auch im abgefallenen Zustand, so daß bei Betätigen der Steuernocke 25 auch beim Verschieben des Angriffspunktes derselben an der Steuermembrane 32 diese einen strömungsgerechten Kurvenverlauf
beibehält.

Bei dieser Ausführungsform können auch die Falschwasserströmungen, die zufolge der Druckunterschiede im
Einlaufkanal hinter die Membrane zu strömen bestrebt
sind, vermieden werden. Dies gelingt trotz der notwendigen, relativ großen Spalten zwischen dem Membranenkörper und der Turbinenwandung, die wegen der in den
natürlichen Gewässern vorkommenden Verunreinigungen
notwendig sind.

Es ist leicht einzusehen, daß die Erfindung stets
eine Form des in die Turbine eintretenden Wasserstrahles
bewirkt, die außerordentlich strömungsgünstig ist.

Aber auch die Turbine selbst weist Vorteile auf.
Der Durchmesser überwiegt bei weitem die Dicke des
Turbinenrades, wobei das Verhältnis bis 1 : 15 gehen
kann. Dabei wird erreicht, daß der kreisende Wasserring
ein hohes Moment bei kleiner Drehzahl des Turbinenrades
erzeugt. Die Anpassung an die Leistungsbereiche unterschiedlich großer Beregnungsanlagen kann einfach durch
Veränderung der Breite des Turbinenrades und des Turbinengehäuses erreicht werden. Durch die dickwandige
Ausführung des Turbinenrades als Vollnabe wirkt das Turbinenrad zugleich als Schwungrad, was zu einem ruhigen
Lauf wesentlich beiträgt. Durch den tangential angeordneten Auslaufkanal kann den Schaufeln eine einfache Form
gegeben werden, weil das im Wasserring umlaufende Wasser
aufgrund der Fliehkraft von selbst die Austrittsöffnung 9 durchströmt. Vorzugsweise werden die Schaufeln
entgegengesetzt der Drehrichtung nach rückwärts gebogen,
um beim tangentialen Auslauf weiters ein zusätzliches
Drehmoment abzugeben.

Die erfindungsgemäße Turbine ist eine extreme
Langsamlaufturbine mit einem verhältnismäßig großen
Durchmesser, wodurch ein großes Moment bei geringer
Drehzahl erhalten wird, wobei gleichzeitig durch die

-6-

langsame Innenströmung der Gesamtwirkungsgrad höher ist
als bei den bekannten Turbinen dieser Gattung.

Patentansprüche:

1. Wasserturbine, vorzugsweise für Beregnungsgeräte, mit auf einem Radkranz angeordneten Schaufeln, die in einem sie umfassenden, geschlossenen Ringraum um die Turbinenachse kreisen und mit einer in einem Abschnitt des Ringraumes angeordneten Eintrittsöffnung, an der die Wasserzuführungsleitung endet sowie mit einer an beliebiger Stelle vorgesehenen Austrittsöffnung für das Wasser, dadurch gekennzeichnet, daß sich im Bereich der Eintrittsöffnung und gegebenenfalls im Bereich des benachbarten Abschnittes der Wasserzuführungsleitung ein flexibler, den Durchflußquerschnitt bestimmender Wandteil befindet, der mittels eines vorzugsweise gesteuerten Druckkörpers, der an der Außenseite dieses Wandteiles angreift, verstellbar ist.

2. Turbine nach Anspruch 1, dadurch gekennzeichnet, daß der Wandteil aus einem gummielastischen Stoff besteht und nach außen von einem etwa senkrecht zur Eintrittsöffnung verstellbaren, pilzförmigen Druckkörper abgestützt ist.

3. Turbine nach Anspruch 1, dadurch gekennzeichnet, daß der Wandteil aus einem dünnen Metallstreifen besteht, der an seinem in der Strömungsrichtung des Wassers vorderen oder hinteren Rand gleitend gehalten ist und eine nach außen gerichtete Erweiterung im Gehäuse bzw. in der Zuführungsleitung abdeckt.

4. Turbine nach Anspruch 3, dadurch gekennzeichnet, daß der Druckkörper aus einer Nocke besteht, die innerhalb der Erweiterung drehbar angeordnet ist.

5. Turbine nach Anspruch 3, dadurch gekennzeichnet, daß der Wandteil aus einem dünnen Metallstreifen besteht, der allseitig von elastischem Material umhüllt ist und zwei an der Turbineninnenwandung anliegende Dichtlippen besitzt.

FIG.3

FIG.1

FIG.2

FIG.4

FIG.5

0125496

Fig. 7

36
38
37
1

Fig. 6

24

32

10

22

Drehrichtung Läufer

23

Europäisches Patentamt

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE-C- 954 589 (PORSCHE KONSTRUKTIONEN) <br> * Seite 3, Zeilen 25-39; Anspruch 3; Abbildung 2 * | 1-4 | F 03 B 15/20 <br> F 03 B 1/04 <br> F 16 K 7/18 |
| Y | US-A-2 598 208 (R.E. BAILEY) <br> * Spalten 2-4, Abbildungen 1,2 * | 1,3,4 | |
| Y | US-A-2 841 358 (T.B. RUSSELL) <br> * Anspruch; Figuren 1,2 * | 2 | |
| A | DE-C- 450 526 (E. BANKI) <br> * Anspruch; Abbildungen 1,2 * | 1 | |
| Y | DE-C- 274 144 (G.C. ADAMS) <br> * Insgesamt * | 1 | RECHERCHIERTE SACHGEBIETE (Int. Cl. ³) |
| A | US-A-4 070 004 (D.R. FRISWELL) <br> * Ansprüche; Figuren * | 5 | F 03 B <br> A 01 G <br> G 05 D <br> F 16 K |
| A | US-A-2 658 711 (E.G. ANDERSON) <br> * Seiten 1,2; Figuren * | 2 | |
| Y | CH-A- 197 387 (G. MÜNCHINGER) <br> * Figur 1; Seite 2, linke Spalte * | 1 | |

--- -/-

Der vorliegende Recherchenbericht wurde für alle Patentansprüche erstellt.

| Recherchenort <br> DEN HAAG | Abschlußdatum der Recherche <br> 31-07-1984 | Prüfer <br> PEETERS F.P. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-4 003 519 (F.V. KRUSE)<br>* Spalte 6, Zeilen 29-68; Spalte 7, Zeilen 1-25; Abbildungen 4,5 *<br>--- | 1 | |
| E | DE-A-3 245 766 (KLEIN, SCHANZLIN & BECKER)<br>* Seite 8, Zeilen 7-14; Figur 7 *<br>----- | 1,2,5 | |

RECHERCHIERTE SACHGEBIETE (Int. Cl. ³)

Der vorliegende Recherchenbericht wurde für alle Patentansprüche erstellt.

| Recherchenort | Abschlußdatum der Recherche | Prüfer |
|---|---|---|
| DEN HAAG | 31-07-1984 | PEETERS F.P. |